Europäisches Patentamt

European Patent Office

Office européen des brevets

(11) Publication number: **0 213 074**
A1

# EUROPEAN PATENT APPLICATION

(21) Application number: **86810346.6**

(22) Date of filing: **07.08.86**

(51) Int. Cl.⁴: **A 47 J 37/12**, A 47 J 37/04

(30) Priority: **16.08.85  CH 3510/85**

(43) Date of publication of application: **04.03.87**
**Bulletin 87/10**

(84) Designated Contracting States: **AT BE CH DE FR GB IT LI
LU NL SE**

(71) Applicant: **Majewski, Robert, Via Zorzi 29,
CH-6900 Lugano (CH)**

(72) Inventor: **Majewski, Robert, Via Zorzi 29,
CH-6900 Lugano (CH)**

(74) Representative: **Bagglolini, Raimondo et al, Racheli &
Fiammenghi Via San Gottardo 15, CH-6900 Lugano (CH)**

(54) **Universal device to cook foodstuffs, particularly to fry potatoes and fries.**

(57)    The device allows to remarkably save the oil and to limit
its absorption by the potatoes and by the other foodstuffs.

It includes a vessel (1) thermically insulated (1') in which
a drum (4) is placed, containing the potatoes or the other
foodstuffs. The drum is placed over a concave basin (7) con-
taining the oil and moves, through a motor with speed re-
ducer, with a rotary motion relative to the basin and to a
coaxial internal stirrer (10). Electrical resistors (5, 6) are
placed inside the vessel and on the tipping cover (2) so that
this last, when open, can serve as a grill. Means for cooling
the oil immediately after the use in order to avoid its de-
terioration are provided.

Besides it can be used as steam pot, pan and oven.

Universal device to cook foodstuffs, peculiarly to fry
potatoes and fries.

The present invention has as object an universal device to
be used in domestic and restaurant kitchens able to fry
every foodstuff, peculiarly potatoes, to cook foods and to
serve as grill and oven, allowing to remarkably save the
dressing, peculiarly oil, and to limit its absorption by
the foodstuffs, peculiarly potatoes, placed to fry, besides
to allow a reduction of the energy consumption. In fact an
oil consumption smaller than 200 g. oil / 2Kg potatoes is
obtained.

Cooking devices, peculiarly to fry potatoes, are known
from the more recent technics. They have essentially the aim
to reduce the oil consumption through a multiple and repeated
frying of a large amount of foodstuffs (multiple runs) using
always the same oil. That is realized through an underpressu-
rized frying or by means of circulation of the foods in the
oil bath. Others have instead the aim to save energy by means
of the recycling of the produced heat or through other means
of heat exchange.

That however serves, on one side, to make the oil available
for several fryings or to save electrical energy on the other
side, but without any contribution to the improvement of the
organolectic properties of the fried product, on the contrary
unfortunately to their detriment.

Said known frying proceedings and devices are extremely irrational; as a matter of fact everybody knows that the oil can
be utilized for frying uses, two or three times at most and
in brought closes time, otherwise it deteriorated and becomes
dangerous for the health.
The universal cooking device according to the present invention eliminates these inconvenients completely and allows to improve the organolectic properties of the cooked or fried product, however allowing an oil or dressing saving together with energy saving.

Other frying devices have been realized to this aim, and namely a frying device throwing or spraying oil on the product to fry; but they are based on expensive, sophisticated and not higly reliable injection and electrical control systems.

The present invention refers instead to an universal cooking device, peculiarly to fry, extremely simple, functional and with low manufacturing cost, even reaching standards of high quality in the food preparation.

More precisely the present invention refers to a portable universal device to be used in domestic and restaurant kitchens able to fry every foodstuff, peculiarly potatoes; to cook foods; and to serve as grill and oven, characterized by the fact that it includes a thermically insulated vessel closed by an equally thermically insulated cover; with a detachable spacer to be used when the device acts as frying device or cooking pot; the above mentioned vessel containing a detachable drum, containing the food to fry, placed over a concave basin, detachable for the cleaning, containing the oil to fry or the food to cook, and moving, through a motor with a speed reducer, with a rotary motion relative to the above mentioned basin and having an external coaxial stirrer; electrical resistors being placed inside the vessel and inside the cover, means being provided to cool the oil immediately after its use, in order to avoid its deterioration.

We give herebelow a detailed description of a more significant form of execution of the invention, not limiting with reference to the figures of the attached drawings, on the other side

- 3 -

0213074

without depriving anything to the generality of the invention.

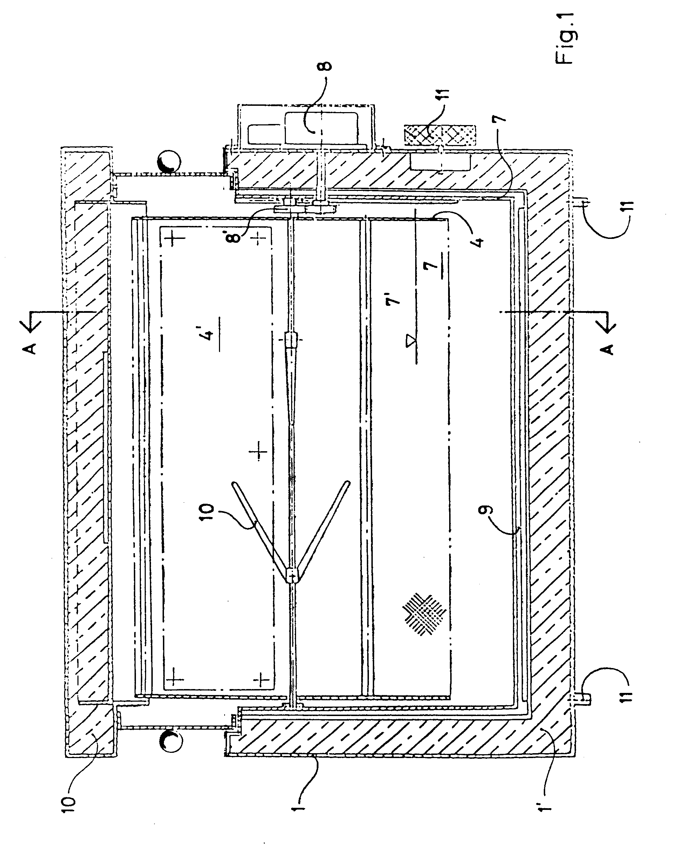

- The fig. 1 shows an axial-longitudinal vertical section of the invention.

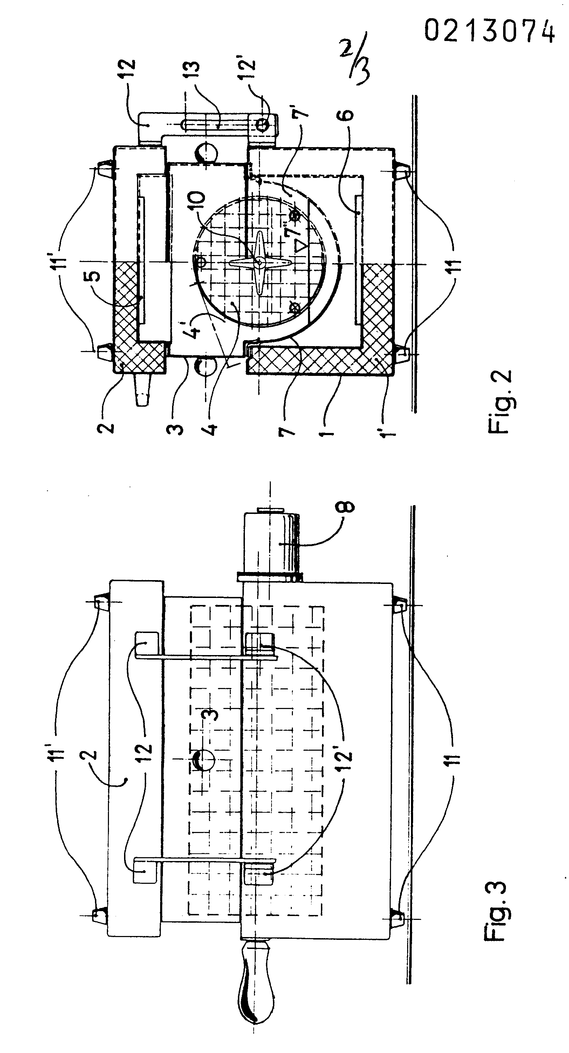

- The fig. 2 shows a view in transverse section, cut along the plane perpendicular to the axis through the points A-A.

- The fig. 3 shows a longitudinal vertical view.

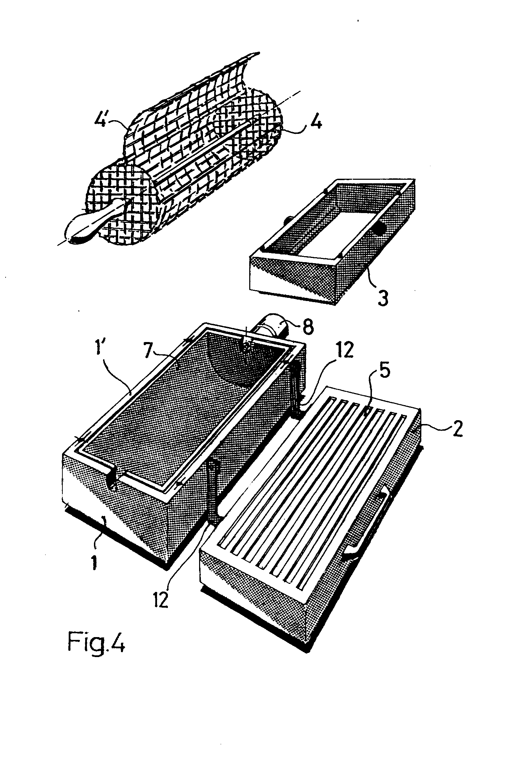

- The fig. 4 shows in perspective an explosed view of the object of the invention.

The device includes the vessel 1, thermically insulated by the insulation 1', in which it is placed a permeable drum 4, usually wire netting, preferably of stainless steel, placed over the concave basin 7, also of stainless steel and containing the oil 7' up to the level 7".

The drum 4 moves with a rotary motion, through the electric motor 8 with speed reducer 8', and exhibits a small door in order to allow the introduction of the potatoes or the other foodstuffs to fry.

Coaxial to the drum 4 it is placed the stirrer 10; it can remain steady if the drum rotates or rotate, if at the limit the drum 4 is steady or rotates with an angular speed different from that of the stirred 10. It can also act as a spit.

With 11 it is indicated a thermostat.

Said means to cool the oil immediately after the use in order to avoid its deterioration, can comprise, for example, a pipe coil with internal water or refrigerant flow or heat exchanger or other cooling devices as known and used in home freezers.

The device allows to save in a very remarkable extent the oil, for instance reducing its amount, for a device of normal type, to 1/4 litre, and avoids that the potatoes or the other foodstuffs absorb an excessive amount of it, since they plunge in the oil only for a short time and are sprayed at intervals by the oil falling down from the wire netting forming the drum walls.

They therefore result more digestible.

Also the possibility to use the cover 2, once turned over, as a grill, exploiting the resistors 5 placed in it, contributing also to the heating of the interior of the vessel 1, is a variant of remarkable useful interest.

The shape of the various parts could change, without going out of the patent protection ambit.

The spacing neck or spacer 3 allow, when removed, the application of the device as oven.

That is allowed by the slide 13 of the articulated joint 12, 12' between cover and vessel, allowing to lower the said cover down to the contact with the vessel and then to its closing.

In the upper position of the slide the cover when turned over places instead itself on the same level 11' of the support plane 11 of the vessel 1 and horizontally, taking a grid configuration.

Also the resistors 5 are placed as a grid.

On the contrary when inserted between the cover 2 and the vessel 1 and not using the drum, it allows the use of the device as a steam pot.

In this case it is provided with safety and pressure control valves not represented.

The drawings don't show even the locking device of the spacer between the cover and the vessel, fully similar to that used in the steam pots known on the market.

So it is obtained an universal device for the cooking, allowing to fry, or to cook, or to roast, or to grill foods and foodstuffs in a simple and functional way, with a remarkable oil or dressing and energy saving, besides exalting the organolectic properties of the same.

Claims

1. Universal portable device to be used in domestic and restaurant kitchens able to fry every foodstuff, peculiarly potatoes; to cook foods; and to serve as grill or oven, characterized by the fact that it includes a thermically insulated vessel (1) covered by a cover (2), thermically insulated too; with a detachable spacer (3) to be used when the device acts as frying device or cooking pot; the said vessel (1) containing a detachable drum (4) containing the foods to fry, placed over a concave basin (7), detachable for the cleaning, containing the oil to fry or the foods to cook and moving, through a motor (8) with speed reducer (8'), with a rotary motion relative to the said basin (7) and provided with a coaxial internal stirrer (10); electrical resistors (5, 6) being placed inside the vessel (1) and inside the cover (2), means being provided to cool the oil immediately after its use, in order to avoid its deterioration.

2. Device according to the claim 1, characterized by the fact that the external surface (4') of the drum (4) is formed by a metallic sheet, bored like a strainer, with an openable small door (4") cut in it.

3. Device according to the claim 1, characterized by the fact that the external surface (4') of the drum (4) is realized by means of a stainless steel wire netting and can be opened through the small door (4").

4. Device according to the claim 1, characterized by the fact that the cover (2) has in its interior the gridshaped resistors (5), has a flat surface on both sides to be able to turn over through the joints (12, 12') articulated with reference to the vessel (1) and to place itself on the same plane of the device by means of the supports (11') forming a grill plane.

5. Device according to the claim 1, characterized by the fact that the spacing element (3) is inserted between the cover (2) and the basin (7) through two gaskets and is pressure locked between the said cover and is provided with a safety and pressure control valve to act as a steam pot.

6. Device according to the claim 1, characterized by the fact that when the spacing element (3) is removed the cover closes directly on the vessel (1) by means of the slide (13) made in the articulated joint arm (12), to act as an oven.

7. Device according to the claim 1, characterized by the fact that the means for cooling the oil immediately after its use, in order to avoid its deterioration, comprise a pipe coil refrigerated by an internal flow of cooling water or cooling means, as well as by coolers as known and used in home freezers.

8. Use of the device described in the claim 1 to fry potatoes with oil consumption smaller than 200 g. oil / 2Kg potatoes.

Fig.1

Fig. 3

Fig. 2

2/3

0213074

Fig.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | CH-A- 656 059 (MAJEWSKI) <br> * Whole document * | 1 | A 47 J 37/12 <br> A 47 J 37/04 |
| A | | 3,8 | |
| Y | CH-A- 643 129 (REESE-TECHNIK) <br> * Whole document * | 1 | |
| A | | 4-6 | |
| A | US-A-1 749 527 (COOK) <br> * Whole document * | 1,3,8 | |
| A | FR-A-2 270 829 (LOTTE) <br> * Whole document * | 1 | **TECHNICAL FIELDS SEARCHED (Int. Cl.4)** |
| A | DE-U-7 225 534 (NEUMÄRKER KG) <br> * Whole document * | 1,4-6 | A 47 J |
| A | FR-A-1 261 308 (COLINET) <br> * Whole document * | 1-3 | |
| A | DE-C- 888 154 (ENGLUND) <br> * Whole document * | 1,3 | |
| A | US-A-1 599 805 (BARSAM) <br> * Whole document * <br> ---    -/- | 1,3 | |

The present search report has been drawn up for all claims

| Place of search | Date of completion of the search | Examiner |
|---|---|---|
| THE HAGUE | 24-11-1986 | SCHARTZ J. |

European Patent
Office

EUROPEAN SEARCH REPORT

0213074
Application number

EP 86 81 0346

Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-2 425 156 (HELGE)<br>* Whole document * | 1,4-6 | |
| A | FR-A- 877 880 (LEPINAY)<br>* Whole document * | 2 | |

TECHNICAL FIELDS
SEARCHED (Int. Cl.4)

The present search report has been drawn up for all claims

| Place of search | Date of completion of the search | Examiner |
|---|---|---|
| THE HAGUE | 24-11-1986 | SCHARTZ J. |